# EUROPÄISCHE PATENTSCHRIFT

(11) **EP 2 347 212 B1**
(45) Veröffentlichungstag und Bekanntmachung des Hinweises auf die Patenterteilung: **05.06.2013**
(21) Anmeldenummer: 10781424.6
(22) Anmeldetag: 04.11.2010
(51) Int. Cl.: F41A 11/00

(54) **KOPPELSTIFT ZUM KOPPELN VON WAFFENBAUTEILEN**
COUPLING PIN FOR COUPLING WEAPON COMPONENTS
BROCHE D'ACCOUPLEMENT POUR L'ACCOUPLEMENT DE COMPOSANTS D'ARMES

(30) Priorität: 30.11.2009 DE 102009056383
(43) Veröffentlichungstag der Anmeldung: 27.07.2011
(73) Patentinhaber: Heckler & Koch GmbH, 78727 Oberndorf/Neckar (DE)
(72) Erfinder: FLUHR, Norbert, 78727 Oberndorf (DE); KOHLER, Daniel, 78727 Oberndorf (DE)
(74) Vertreter: Jacoby, Georg
(86) Internationale Anmeldenummer: PCT/EP2010/006731
(87) Internationale Veröffentlichungsnummer: WO 2011/063887

(56) Entgegenhaltungen:
- EP-A1- 1 767 892
- WO-A1-2009/127301
- US-A- 6 041 536
- US-A1- 2010 109 348
- US-A1- 2010 150 648

## Beschreibung

Die Erfindung betrifft einen Koppelstift zum Koppeln von Waffenbauteilen, insbesondere von Waffengehäusebauteilen sowie ein Waffengehäuse und eine Waffe mit einem solchen Koppelstift.

Allgemein sind verschiedene technische Lösungen zum Verbinden und Koppeln verschiedener Waffenbauteile bekannt.

Bei der Herstellung von Waffenbauteilen können Fertigungstoleranzen auftreten, welche bei zusammengesetzten Waffenbauteilen ein Passungsspiel zwischen den Waffenbauteilen verursachen können. Ein solches Passungsspiel kann insbesondere zwischen zwei Gehäusebauteilen, beispielsweise einem Gehäuseoberteil und einem Gehäuseunterteil, auftreten und die Funktionsweise einer Waffe oder daran montierter Zusatzeinrichtungen beeinträchtigen. Beispielsweise kann ein Passungsspiel die Funktionsfähigkeit einer am Gehäuse montierten Visiereinrichtung und damit die Schusspräzision einer Waffe herabsetzen.

Zum Ausgleich eines solchen Passungsspiels zwischen Gehäusebauteilen ist es beispielsweise bekannt, eine oder mehrere elastische Gumminocken zwischen dem Gehäuseoberteil und dem Gehäuseunterteil anzuordnen, so dass beim Zusammensetzen der Gehäusebauteile die Gumminocken elastisch verformt und gespannt werden und so ein Passungsspiel beseitigen. Da die Gumminocken einem andauernden Anpressdruck ausgesetzt sind, werden diese teilweise dauerhaft plastisch verformt und verlieren ihre Spannkraft und Elastizität und damit ihre Fähigkeit, das Passungsspiel auszugleichen. Somit sind solche Gumminocken regelmäßig unter Zusatzkosten zu erneuern.

EP 1 767 892 und WO 2009/127301 offenbaren Waffenlaufsicherungen und Verfahren zum Sichern eines Waffelaufes unter Einführung eines Sperrelements in einen Waffenlauf oder ein Patronenlager.

Die DE 10 2006 011 009 B4, die AT 325 463 B und die US 2008/0236016 A1 zeigen zudem verschiedene Arten, Waffenbauteile miteinander zu koppeln.

Vor diesem Hintergrund liegt die Aufgabe der vorliegenden Erfindung darin, ein verbessertes Kopplungsmittel bereitzustellen, das ein Passungsspiel zwischen Waffenbauteilen vermindert und vorgenannte Nachteile wenigstens teilweise überwindet.

Diese Aufgabe lösen die Gegenstände der unabhängigen Ansprüche. Weitere vorteilhafte Ausgestaltungen und bevorzugte Ausführungsformen sind in den Unteransprüchen angegeben.

Nach Anspruch 1 ist ein erfindungsgemäßer Koppelstift mit wenigstens einem Stützabschnitt axial in einen Stützbereich an einem Waffenbauteil und mit wenigstens einem Stellabschnitt axial in einen Stellbereich an einem anderen Waffebauteil entnehmbar einsetzbar, wobei im Koppelstift ein axial verstellbarer federbelasteter Spannstift angeordnet ist, der über eine kraftübertragende Kopplung auf ein quer zum Spannstift verstellbares Spannelement wirkt, welches im Stellabschnitt aus dem Koppelstift herausragt und eine Stellkraft auf den Stellbereich ausübt, und den Stellbereich und den Stützbereich zur Längsachse des Koppelstiftes gegeneinander verstellt und/oder verspannt, undwenigstens im Stellabschnitt des Koppelstiftes eine in Längsrichtung verlaufende Ausnehmung zur Aufnahme einer Gegenfläche ausgebildet ist.

Gemäß den Ansprüchen 10 und 11 betrifft die Erfindung auch ein Waffengehäuse und eine Waffe mit einem Koppelstift.

Das Verspannen des Stellbereichs zum Stützbereich und quer zur Längsachse des Koppelstiftes, also quer zu seiner Einbaurichtung, stellt sicher, dass ein eventuelles Passungsspiel auf Grund von Fertigungstoleranzen zwischen Stellbereich und Stützbereich eliminiert wird. Die Kopplung nur wenigstens eines Stützabschnitts an einem Waffenbauteil mit wenigstens einem Stellabschnitt an einem anderen Waffenbauteil erlaubt einen einfachen Aufbau. Waffenbauteile können beliebige miteinander koppelbare Waffenbauteile sein, beispielsweise Gehäuseschalen, daran montierte Picatinnyschienen oder andere daran anbringbare Zusatzvorrichtungen. Eine entsprechende Längendimensionierung des Stützbereichs, Stützabschnitts sowie des Stellabschnitts und des Stellbereichs verhindert dabei zuverlässig ein Verkanten des Koppelstiftes. Über den Spannstift und das Spannelement lässt sich auch vorteilhaft eine definierte und reproduzierbare Stellkraft bereitstellen und somit die Funktionssicherheit und Zuverlässigkeit des Koppelstiftes erhöhen.

Auch kann der erfindungsgemäße Koppelstift über ein Bedienelement zwischen einer Spannlage und einer Freigabelage verstellbar sein, wobei der Koppelstift in der Freigabelage aus den Waffebauteilen entnehmbar oder in diese einsetzbar ist und in der Spannlage den Stellbereich und den Stützbereich gegeneinander verstellt und/oder verspannt. (Anspruch 2) Diese Ausführung stellt zusätzlich eine gewisse Entnahmesicherung bereit, die den Koppelstift vor einer unbeabsichtigten Entnahme oder einem Herausfallen schützt.

Ferner kann der erfindungsgemäße Koppelstift zur Kopplung und Fixierung eines zwischen zwei Stützabschnitten angeordneten Stellbereichs ausgelegt sein. (Anspruch 3) Dabei stützt sich der erfindungsgemäße Koppelstift beidseitig ab, wodurch ein Verkanten noch besser verhindert wird und die Abstützfunktion verbessert wird. Die Länge der Stützbereiche, der Stützabschnitte sowie des Stellabschnitts und des Stellbereichs kann in diesem Fall gering ausfallen, so dass eine kompakte Bauweise gewährleistet ist. Bei dieser Ausführung sind auch höhere Stell- bzw. Spannkräfte übertragbar.

Beim erfindungsgemäßen Koppelstift kann der Spannstift zur kraftübertragenden Kopplung einen keilförmigen oder kegelstumpfförmigen Abschnitt umfassen, der in der Spannlage das Spannelement radial aus dem Koppelstiftgehäuse drängt. (Anspruch 4) Solche keilförmigen oder kegelstumpfförmigen Abschnitte können im Spannstift ein- oder zweiseitig in Axialrichtung ausgebildet sein. Grundsätzlich kann der Spannstift auch andere geeignete Geometrien umfassen, wie beispielsweise einen abgerundeten Stiftkopf, der am Spannelement angreift, um das Spannelement aus dem Koppelstiftgehäuse zu drängen. Am Spannstift kann zur kraftübertragenden Kopplung der Abschnitt ein- oder zweiseitig oder auch umlaufend ausgebildet sein. Keilförmige oder kegelstumpfförmige Abschnitte oder auch gekrümmte Wirkflächen am Spannstift, die als Stellrampe am Spannelement angreifen, haben sich als besonders geeignet erwiesen.

Auch kann der keilförmige Abschnitt konisch ausgebildet sein. (Anspruch 5) Eine konische Ausgestaltung erhöht die Funktionssicherheit und verbessert ein Zusammenwirken von Spannstift und Spannelement, da der Spannstift beliebig innerhalb des Koppelstiftes verdreht sein kann, ohne seine Funktion einzubüßen. Eine falsche Montage scheidet aus.

Auch ist beim erfindungsgemäßen Koppelstift wenigstens im Stellabschnitt des Koppelstiftes eine in Längsrichtung verlaufende Ausnehmung zur Aufnahme einer Gegenfläche ausgebildet. Sofern die Ausnehmung über den Stellbereich hinausragt und in den oder die Stützbereiche hineinragt, lässt sich so ein ausreichendes Spiel des Stellbereichs gegenüber den Stützbereichen sicherstellen. Alternativ kann eine im Stellbereich gebildete Ausnehmung, beispielsweise eine Öse, Scharnierbohrung oder Hülse in ihrem Durchmesser vergrößert sein, um eine entsprechende Spielfreiheit zu gewährleisten.

Ferner kann der erfindungsgemäße Koppelstift über ein Sicherungselement gegen eine vollständige Entnahme gesichert sein. (Anspruch 6) Damit ist mit einfachen Mitteln eine Verliersicherung bereitgestellt, die einen Verlust des Koppelstiftes zuverlässig verhindert.

Auch kann das Sicherungselement in seinen Sicherungslagen federbelastet in die Ausnehmung des Koppelstiftes eingreifen. (Anspruch 7) Die Sicherung einer Eingriffslage des Sicherungselements über ein Federelement lässt sich vorteilhaft mit einfachen Mitteln und kostengünstig bereitstellen.

Auch kann beim erfindungsgemäßen Koppelstift am Sicherungselement ein federbelasteter Rastmechanismus vorgesehen sein, welcher mit wenigstens einer Rastkontur in der Ausnehmung verrastet. (Anspruch 8) Eine Rastkontur lässt sich vorteilhaft fertigungstechnisch mit einfachen Mitteln in den Koppelstift einarbeiten.

Schließlich kann beim erfindungsgemäßen Koppelstift das Sicherungselement über ein Bedienelement außer Eingriff bringbar sein. (Anspruch 9) Als Bedienelement kann beispielsweise ein Stift, ein Bolzen, eine Patronenspitze oder ein sonstiges geeignetes Mittel verwendet werden. Da solche Bedienelemente üblicherweise am Einsatzort einer Waffe vorhanden sind, sind aufwendige Werkzeuge nicht erforderlich.

Die Erfindung wird nachfolgend beispielhaft anhand der Zeichnungen näher beschrieben. In den Figuren bezeichnen gleiche Bezugszeichen durchgehend jeweils gleiche Elemente. Dabei zeigt:
- Figur 1: eine Längsschnittdarstellung eines erfindungsgemäßen Koppelstiftes, der vollständig in die Waffenbauteile eingesetzt ist und bei dem der Spannstift seine Spannlage einnimmt;
- Figur 1a: eine Querschnittsdarstellung (Schnitt A-A in Fig. 4) des erfindungsgemäßen Koppelstiftes aus Fig. 1 bei dem der Spannstift seine Löselage einnimmt;
- Figur 2: eine Längsschnittdarstellung des Koppelstiftes aus Figur 1 in einer um 90° versetzten Schnittebene;
- Figur 3: eine Längsschnittdarstellung eines erfindungsgemäßen Koppelstiftes, der teilweise in Waffenbauteile eingesetzt ist;
- Figur 4: eine Längsschnittdarstellung des Koppelstiftes aus Figur 3, der vollständig in die Waffenbauteile eingesetzt ist und sich in seiner Freigabelage befindet;
- Figur 5: eine Längsschnittdarstellung des Koppelstiftes aus Figur 5 teilweise demontiert;
- Figur 6: eine perspektivische Längsschnittdarstellung eines erfindungsgemäßen Koppelstiftes mit einer alternativen Ausgestaltung eines Spannstiftes;
- Figur 7: eine perspektivische Längsschnittdarstellung eines erfindungsgemäßen Koppelstiftes mit einer weiteren alternativen Ausgestaltung eines Spannstiftes; und
- Figur 8: eine perspektivische Längsschnittdarstellung eines erfindungsgemäßen Koppelstiftes mit einer weiteren alternativen Ausgestaltung eines Spannstiftes.

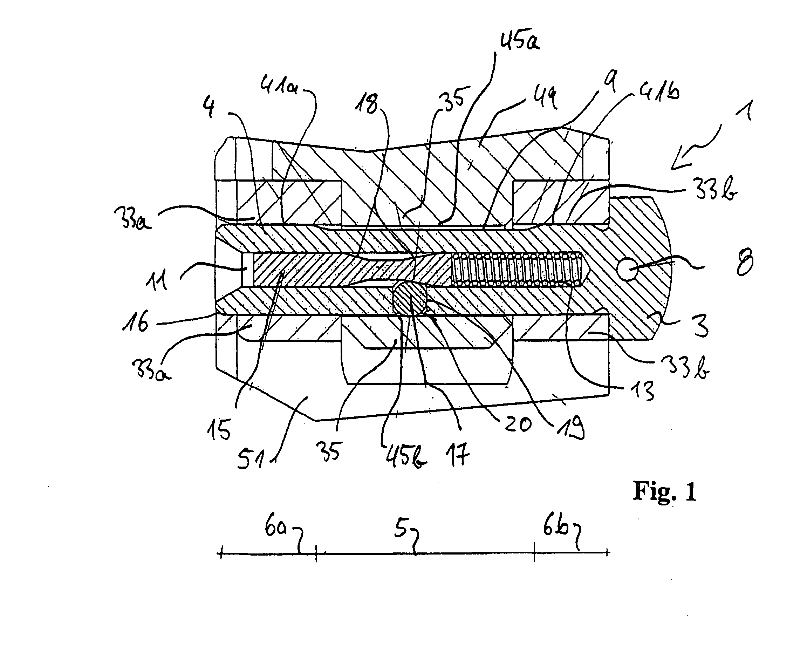

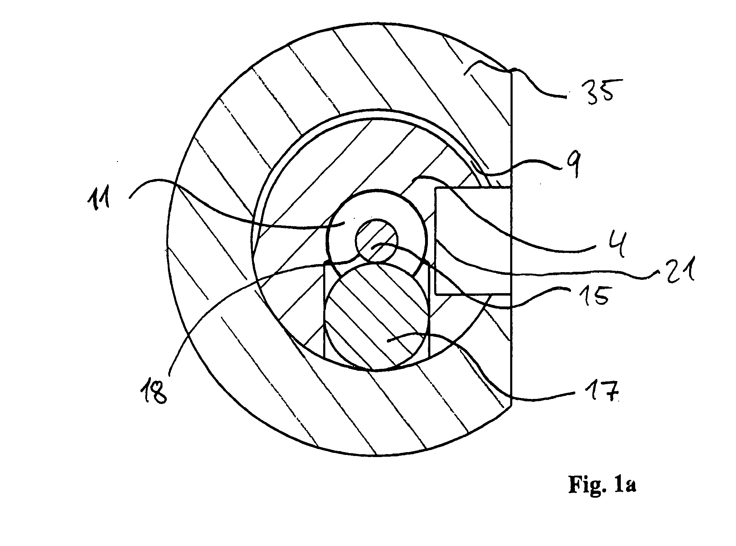

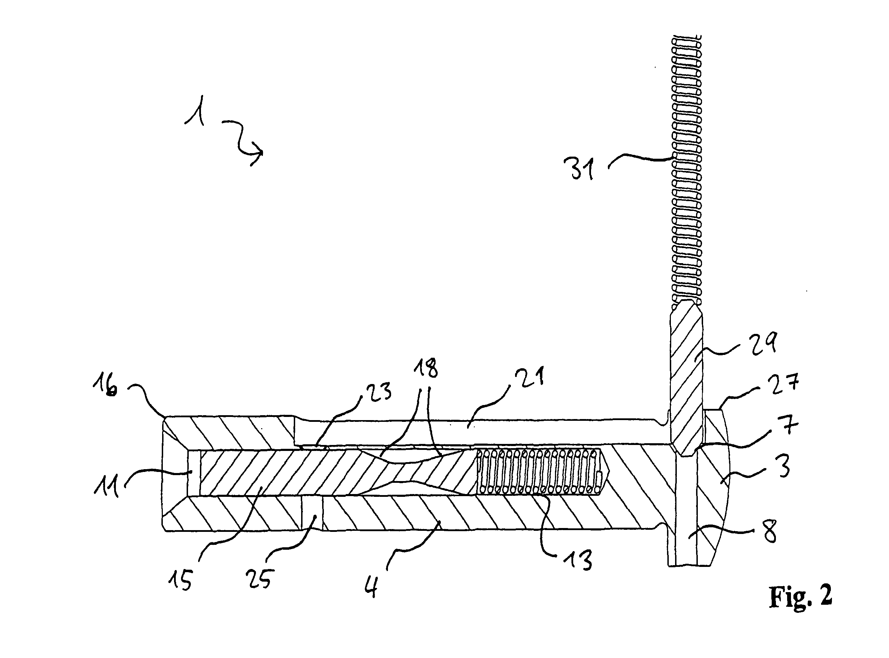

Figur 1 zeigt eine Längsschnittdarstellung eines erfindungsgemäßen Koppelstiftes 1, der ausgelegt ist, um zwei Waffenbauteile 49, 51, beispielsweise ein Gehäuseoberteil 49 und ein Gehäuseunterteil 51, miteinander zu verbinden. Der Koppelstift 1 umfasst einen Kopf 3 und ein zylindrisches Koppelstiftgehäuse 4. Im Kopf 3 ist eine Ausnehmung 7, beispielsweise ein Sackloch oder eine Aussparung, als Rastmulde ausgebildet (vgl. Fig. 2), an die eine den Kopf 3 durchsetzende Bohrung 8 mit einem geringerem Durchmesser anschließt (vgl. Fig. 2). Ferner umfasst das Koppelstiftgehäuse 4 einen mittleren Stellabschnitt 5 und zwei Stützabschnitte 6a, 6b.

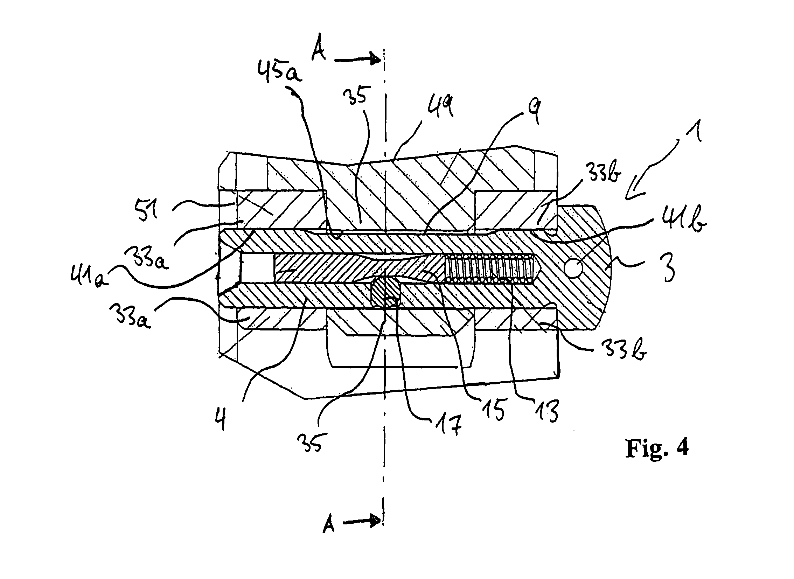

Am Koppelstiftgehäuse 4 entlang erstreckt sich in Längsrichtung eine den Stellabschnitt 5 definierende Ausnehmung 9, die beidseitig von erhabenen die Stützabschnitte 6a, 6b definierenden Abschnitten 41 a, b begrenzt wird. Die Ausnehmung 9 bzw. der Stellabschnitt 5 ist so dimensioniert, dass ein Stellbereich 35 an einem Waffenbauteil 49 bei eingebautem Koppelstift 1 vollständig innerhalb des Stellabschnitts 5, also im Bereich der Ausnehmung 9 und zwischen den Stützabschnitten 6a, 6b zwischen den erhabenen Abschnitten 41 a, b liegt. Die Stützabschnitte 6a, 6b bzw. die erhabenen Abschnitte 41 a, b üben dabei an den Stützbereichen 33a, 33b des Waffenbauteils 51 ihre Stützfunktion aus, und zwar in den Bereichen/Abschnitten, in denen sich die Stützabschnitte 6a, 6b bzw. die erhabenen Abschnitte 41a, b und die Stützbereiche 33a, 33b überlappen. Die Ausnehmung 9 verläuft am Umfang entlang bis in den Äquatorbereich des Koppelstiftgehäuses 4, so dass hier der Stellbereich 35 relativ zu den Stützbereichen 33a, 33b quer zur Längsrichtung verstellbar ist. Fig. 1a zeigt die Ausnehmung 9 am Koppelstiftgehäuse 4 in einer Querschnittsdarstellung (Schnitt A-A aus Fig. 4) durch den Stellbereich 35, wobei sich der Spannstift 15 in seiner Löselage befindet und keinen Druck auf das Spannelement 17 ausübt.

In einer alternativen, nicht dargestellten Ausführung ist anstatt oder in Ergänzung zur Ausnehmung 9 die den Stellbereich definierende Öse oder Öffnung, insbesondere im oberen Teil des Stellbereichs 35, im Vergleich zu den die Stützbereiche 33a, 33b bildenden Öffnungen/Ösen erweitert ausgeführt und gewährleistet so die Verstellbarkeit.

Innerhalb des Koppelstiftgehäuses 4 ist eine Ausnehmung 11, beispielsweise eine Sacklochbohrung ausgebildet, in die ein Federelement 13, beispielsweise eine Druckfeder, eingesetzt ist. Die Druckfeder 13 spannt einen Spannstift 15 mit einer konisch verjüngten Taille in Richtung des Koppelstiftendes 16 vor. Dabei wirkt der taillierte Spannstift 15 mit einer der beiden von der Taille aus ansteigenden kegelstumpfförmigen Flanken 18 auf ein kugelförmiges Spannelement 17, das in einer das Koppelstiftgehäuse 4 radial durchsetzenden Ausnehmung 19 angeordnet ist. Das Spannelement 17 übt die Stellwirkung auf den Stellbereich 35 aus. Die an der Außenseite der Ausnehmung 19 umlaufenden Seitenkanten 20 sind nach Einsetzen des Spannelements 17 entsprechend bearbeitet, beispielsweise verstemmt oder auf andere Weise geeignet verformt, so dass das Spannelement 17 gegen ein vollständiges Heraustreten aus der Ausnehmung 19 gesichert ist.

Zur Herstellung des Koppelstiftes 1 werden zunächst das Federelement 13 und der Spannstift 15 in die Sacklochbohrung 11 eingeführt und vorgespannt, wonach von außen das Spannelement 17 in die Ausnehmung 19 eingesetzt und dort verstemmt wird. Nach dem Verstemmen ist der Koppelstift 1 nicht mehr demontierbar.

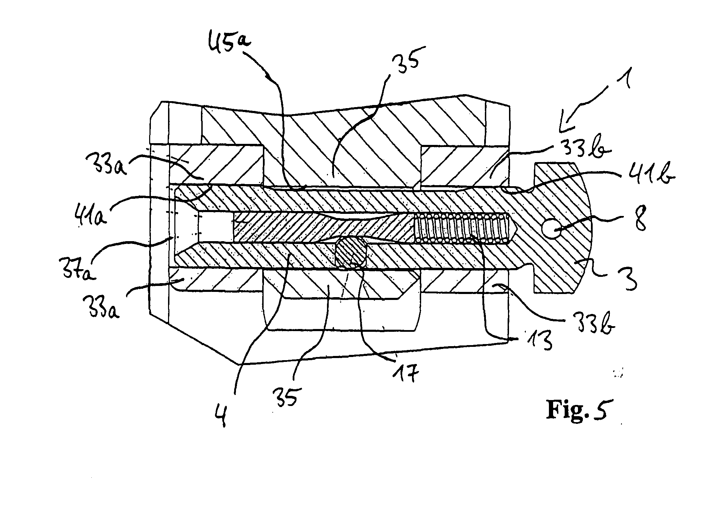

Ferner ist der Koppelstift 1 über ein Bedienelement (nicht gezeigt), beispielsweise eine Patrone oder ein Stift, zwischen einer Spannlage (vgl. Fig. 1) und einer Freigabelage (vgl. Fig. 4) verstellbar, wobei der Koppelstift 1 in seiner Freigabelage in die Waffenbauteile 49, 51 einsetzbar oder aus diesen entnehmbar ist. In der Spannlage verstellt und/oder verspannt der Koppelstift 1 dann einen Stellbereich 35 gegenüber den Stützbereichen 33a, b und damit die Waffebauteile 49, 51 quer zur Einbaurichtung des Koppelstiftes 1 gegeneinander. (vgl. Fig. 4 bis 5)

In der Spannlage wirkt der Spannstift 15 derart auf das Spannelement 17, dass das Spannelement 17 wenigstens teilweise aus der Ausnehmung 19 aus dem Koppelstiftgehäuse 4 herausgedrückt wird. Das Federelement 13 übt dabei einen axialen Druck auf den Spannstift 15 aus, der die Kraft radial über seine Keilfläche 18 verstärkt auf das Spannelement 17 weiterleitet. Die Kraftverstärkung richtet sich dabei nach Keil/Kegelwinkel der Keilfläche 18.

Die in Fig. 1 dargestellte Konfiguration nehmen die maßgeblichen Bauteile ein, wenn die Spannlage noch nicht vollständig eingenommen ist. Das Spannelement 17 liegt zwar bereits am Stellbereich 35 (Gegenfläche 45b) an. Dieser ist jedoch noch nicht im Stellabschnitt 5 in die Ausnehmung hineingezogen.

Figur 2 zeigt den Koppelstift 1 in einer um ca. 90° versetzten Längsschnittdarstellung. Der Kopf 3 ist einseitig annähernd zum Durchmesser des Koppelstiftgehäuses 4 abgeflacht. Ferner verläuft vom Koppelstiftkopf 3 am zylindrischen Koppelstiftgehäuse 4 entlang eine Längsnut 21 in Richtung des Koppelstiftendes 16. In die Längsnut 21 greift ein über ein Federelement 31 federbelasteter Haltestift 29 ein. Das Federelement 31 kann beispielsweise als Druckfeder ausgebildet sein. Der Haltestift 29 kann beispielsweise in einem unteren oder auch oberen Waffengehäuseteil 49, 51 gelagert sein, beispielsweise in einer dort ausgebildeten Aufnahme (nicht gezeigt).

Der Haltestift 29 ist in der Ausnehmung 7 kraft- und/oder formschlüssig verrastet. Die Ausnehmung 7 wird über eine daran anschließende, den Kopf 3 durchsetzende Bohrung 8 mit geringerem Durchmesser verlängert. Bevorzugt besitzt die Ausnehmung 7 an ihren oberen Außenwänden zur leichteren Entrastung des Haltestiftes 29 eine Fase.

Beim Herausziehen des Koppelstiftes 1 aus den Waffenbauteilen 49, 51 entrastet der Haltestift 29 aus der Ausnehmung 7 und kann innerhalb der Längsnut 21 bis zu dem am Kopf 3 gegenüberliegenden Ende der Längsnut entlang gleiten, wo eine weitere Ausnehmung bzw. Rast 23 ausgebildet ist, in die der in der Längsnut federnd gelagerte Haltstift 29 bei fast vollständig aus den Gehäusebauteilen 49, 51 entnommenem Koppelstift 1 einrasten kann. Unterhalb der Rast 23 ist eine Ausnehmung 25, beispielsweise eine Bohrung ausgebildet, deren Durchmesser geringer ist als der der Rast 23 und die das Koppelstiftgehäuse 4 vollständig durchsetzt. Bevorzugt besitzt die Rast 23 an ihren oberen Außenwänden zur leichteren Entrastung des Haltestiftes 29 eine Fase.

Fig. 1 und 3 bis 5 zeigen verschieden Montage- bzw. Demontagepositionen des Koppelstiftes 1.

Der Koppelstift 1 umfasst zum Koppeln zweier Waffenbauteile 49, 51 die zwei Stützabschnitte 6a, 6b und den zwischen den zwei Stützabschnitten 6a, 6b angeordneten Stellabschnitt 5. Diese Stützabschnitte 6 und der Stellabschnitt 5 können jeweils mit den Stützbereichen 33a, b und dem Stellbereich 35 der Waffenbauteile 49, 51 in Eingriff gehen. Der Stellbereich 35 und die Stützbereiche 33a, b sind hier als Laschen 33a, 33b und 35 ausgebildet oder angeordnet. Die Laschen 33a und 33b sind jeweils an einem Gehäuseunterteil 51 und die Lasche 35 an einem Gehäuseoberteil 49 ausgebildet. Die Laschen 33a, 33b und 35 können auch die Form einer Öse, einer Scharnierbohrung oder andere geeignete Geometrien aufweisen und/oder vollständig in die Gehäusebauteile 49, 51 integriert sein, beispielsweise als Bohrung in einem Gehäuseblock (nicht gezeigt).

Innerhalb der Laschen 33a und 33b befinden sich Ausnehmungen 37a, 37b und in der Lasche 35 eine Ausnehmung 39. Die Ausnehmungen 37a, b und 39 korrespondieren in der dargestellten Lage miteinander, so dass der Koppelstift 1 in diese axial eingesetzt werden kann, wenn alle Ausnehmungen nach Art eines Beschlags oder Scharniers angeordnet sind und miteinander fluchten. Die Ausnehmung 39 kann auch einen größeren Durchmesser als die Ausnehmungen 37a, b aufweisen, um ein ausreichendes Stellspiel der Lasche 35 gegenüber den Laschen 33 a, b zu gewährleisten. In diesem Falle wäre die Teilverjüngung 9 zur Aufnahme bzw. zum Verschieben der Lasche 35 nicht erforderlich, da die vergrößerte Laschenausnehmung die Funktion der Ausnehmung 9 übernehmen kann. Die Außenkontur des Koppelstiftes 1 und die Innenkonturen der Ausnehmungen 37a, b sind so aneinander angepasst, dass der Koppelstift 1 darin exakt und mit geringem Spiel geführt ist.

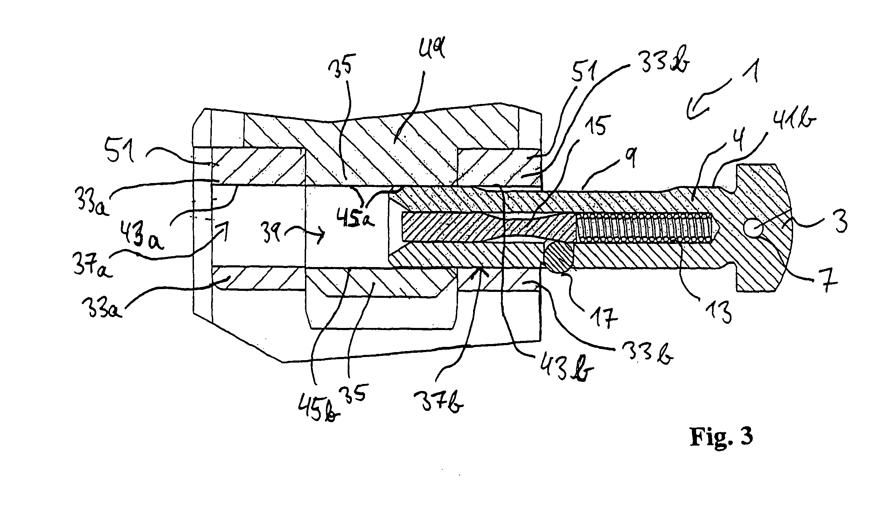

Zum Einbau des Koppelstiftes 1 wird zunächst der Haltestift 29 in eines der Gehäusebauteile 49, 51 so weit eingeschoben, bis er nicht mehr daraus hervorsteht. In dieser Position kann ein Sicherungselement (nicht gezeigt), beispielsweise ein Plättchen oder ein Blech oder ähnliches, über den Haltestift 29 geschoben werden, um diesen in dieser Stellung zu sichern. Anschließend lässt sich der Koppelstift 1 in die Laschen 33a, b und 35 einführen. Der Koppelstift 1 ist wie in Fig. 3 gezeigt von rechts eingeführt. Er kann aber auch von links eingeführt werden, wobei in diesem Fall der Haltestift 29 auf der linken Seite anzuordnen ist. Beim Einführen ist der Koppelstift 1 derart angeordnet, dass die Längsnut 21 zum gesicherten Haltestift 29 weist.

Beim Einführen des Koppelstiftes 1 gemäß der Darstellung in den Fig. 3 bis 5 von der in Schussrichtung gesehenen rechten Seite in die Laschen 33a, b und 35 kann der Koppelstift 1 zunächst soweit eingeschoben werden, bis das aus dem Koppelstiftgehäuse 4 herausragende Spannelement 17 an die Lasche 33b anschlägt (vgl. Figur 3). In dieser Position kann das den Haltestift 29 sichernde Sicherungselement (nicht gezeigt) derart verschoben oder entfernt werden, dass der Haltestift 29 freigegeben wird. Aufgrund des Federdrucks des Federelements 31 geht dann der Haltestift 29 mit der Längsnut 21 in Eingriff.

Um den Koppelstift 1 vollständig in die Laschen 33a, 33b und 35 einführen zu können, wird zunächst das Spannelement 17 aus seiner Spannstellung in seine Freigabestellung gebracht. Dazu kann beispielsweise ein Stift oder eine Patronenspitze in die Sackbohrung 11 von dem Koppelstiftende 16 aus eingeführt und der Sparnstift 15 in Richtung Kopf 3 des Koppelstiftes 1 gegen den Federdruck des Federelements 13 gedrückt werden. Dadurch wird der Spannstift 15 in seine Freigabestellung gebracht und gibt das Spannelement 17 frei (vgl. Fig. 4). Gleichzeitig wird ein noch größerer Druck auf den Kopf 3 des Koppelstiftes 1 ausgeübt. Der Koppelstift 1 lässt sich nun vollständig in die Laschen 33a, 33b und 35 bis zum Anschlag des Kopfes 3 einführen. In dieser Position rastet nunmehr der Haltestift 29 in die Ausnehmung 7 im Kopf 3 des Koppelstiftes 1 ein. Somit ist der Koppelstift 1 zusätzlich gegen ein ungewolltes seitliches Auswandern, beispielsweise während des Gebrauchs der Waffe, gesichert.

Nach Entnahme der Patrone oder des Stiftes verschiebt das Federelement 13 den konischen Spannstift 15 in seine Spannlage (vgl. Fig. 1), in welcher der Spannstift 15 über seine Flanken 18 das Spannelement 17 in die Spannlage verschiebt. Dabei übt der Spannstift 15 eine Radialkraft auf das Spannelement 17 aus, welche wiederum das Spannelement 17 teilweise aus dem Koppelstiftgehäuse 4 drückt, wobei die Kraft auf die Gegenfläche 45b der Lasche 35 weitergegeben wird.

Bei vollständig eingeschobenem Koppelstift 1 liegen die im Vergleich zur Ausnehmung 9 erhabenen Abschnitten 41 a und 41 b des Koppelstiftgehäuses 4 an Gegenflächen 43a, 43b der Stützbereiche bzw. Laschen 33a und 33b an und stützen sich dagegen ab. Zusätzlich übt das Spannelement 17 einen Anpressdruck auf den Stellbereich bzw. die Gegenfläche 45b aus. Aufgrund der Abstützung einerseits und des Anpressdrucks andererseits wird die Lasche 35 nach unten gegenüber den Laschen 33a und 33b derart verschoben, dass die Lasche 35 mit Ihrer Gegenfläche 45a in Richtung der Ausnehmung 9 verschoben und verspannt wird. Insgesamt ist die Breite bzw. Dimension der Ausnehmung 9 größer als die Dimension der Lasche 35 und damit der Gegenfläche 45a. Somit ist eine freie Bewegbarkeit der Lasche 35 gegenüber den Laschen 33a und 33b gewährleistet.

Über das Verschieben und Verspannen der Lasche 35 wird ein eventuelles Passspiel zwischen den Laschen 33a und b sowie der Lasche 35 und damit zwischen dem Gehäuseoberteil 49 und dem Gehäuseunterteil 51 aufgehoben. Zusätzlich können auch weitere Koppelstifte (nicht gezeigt) an mehreren Stellen, beispielsweise auf der gegenüberliegenden Seite und/oder an den Seiten, in die Gehäusebauteile 49, 51 eingesetzt werden, so dass das Passungsspiel zwischen beiden Gehäusebauteileri 49, 51 vollständig eliminiert werden kann.

Zur Entnahme des Koppelstiftes 1 aus den Laschen 33a und b und Lasche 35, beispielsweise zum Öffnen oder Trennen der Gehäusebauteile 49, 51, wird zunächst wieder ein Stift oder eine Patronenspitze in das Koppelstiftende 16 in die Sackbohrung 11 eingeführt und ein Druck auf den Spannstift 15 in Richtung des Kopfes 3 des Koppelstiftes 1 ausgeübt. Damit gibt der Spannstift 15 in der Freigabelage das Spannelement 17 frei. In der Freigabelage lässt sich der Koppelstift 1 aus den Laschen 33a, 33b und 35 entnehmen bzw. herausziehen. Dabei wird die form- bzw. kraftschlüssige Verrastung des Haltestifts 29 gelöst, wobei die Fase in der Rast 7 ein Entrasten erleichtert.

Der Koppelstift 1 kann nun so weit entnommen werden, bis der innerhalb der Längsnut 21 gleitende Haltestift 29 an dem dem Kopf 3 gegenüberliegenden Ende der Längsnut 21 anschlägt. In dieser Stellung ist der Haltestift 29 wieder form- und kraftschlüssig in Eingriff mit der Rast 23 der Längsnut 21. Somit wird der Koppelstift 1 über den Haltestift 29 unverlierbar an einem der Gehäusebauteilen 49, 51, beispielsweise an dem Gehäuseunterteil 51, gehalten. Auch können in dieser Position die beiden Gehäusebauteile 49, 51 voneinander getrennt, beispielsweise nach oben oder nach unten oder seitlich verschwenkt werden. Der Haltestift 29 lässt sich in dieser Position nicht aus der Längsnut 21 entnehmen, da der Spannstift 15 die Bohrung 25 verdeckt, so dass der Haltestift 29 nicht durch die Bohrung 25 beaufschlagt und entkoppelt werden kann. Um den Koppelstift 1 vollständig zu entnehmen, muss dieser zunächst wieder innerhalb der Laschen 33a, 33b und 35 in seine Montageposition gebracht werden.

In der Montageposition kann beispielsweise ein dünner Stift oder Bolzen in die Bohrung 8 vom dem Haltestift 29 gegenüberliegenden Ende in den Kopf 3 eingeführt werden. Damit kann das Ende des Haltestifts 29 außer Eingriff mit der Ausnehmung 7 geschoben werden.

Der Haltestift 29 wird dann so weit aus der Längsnut 21 und dabei aus dem Kopf 3 des Koppelstiftes 1 herausgedrückt, bis der Haltestift 29 vollständig außerhalb des Kopfes 3 angeordnet ist. In dieser Stellung lässt sich wiederum ein Sicherungselement, beispielsweise ein Stahlplättchen (nicht gezeigt), zwischen dem abgeflachten Teil 27 des Kopfes 3 und dem Gehäuseunterteil 51 einschieben und über den Haltestift 29 setzen, so dass der Haltestift 29 im Gehäuseunterteil 51 gehalten wird. Bei einer entsprechenden wie zuvor beschriebenen Druckausübung über ein Bedienelement auf den Druckstift 15 lässt sich nunmehr der Koppelstift 1 aus den Laschen 33a, 33b und 35 entfernen.

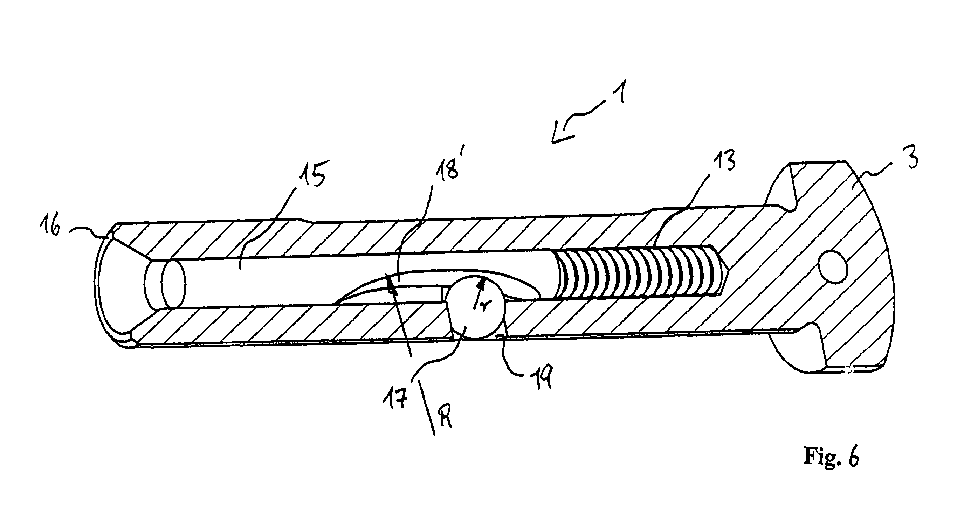

Die Fig. 6 bis 8 zeigen alternative Ausgestaltungen des Spannstiftes 15.

In der in Fig. 6 gezeigten Ausgestaltung umfasst der Spannstift 15 einen einseitig vom Kopf 3 des Koppelstiftes 1 zu dessen Ende 16 gekrümmt (z.B. zylindrisch) verlaufenden Flankenabschnitt 18'. Das dem Federelement 13 zugewandte Ende des Flankenabschnitts 18' drängt in der Spannlage das Spannelement 17 aus der Ausnehmung 19. In der Löselage ist der mittlere Bereich des Flankenabschnitts 18' über dem Spannelement 17 angeordnet, so dass dieses innerhalb der Ausnehmung 19 beweglich ist. Die Krümmung R des Flankenabschnitts 18' ist dabei so auf die Geometrie des Spannelements 17 abgestimmt - z.B. den Radius r einer Kugel - dass eine ausreichende Stellwirkung erzielt wird und gleichzeitig Flankenabschnitt 18' und Spannelement 17 sich nicht unlösbar miteinander verkeilen und damit ein Lösen des Spannstifts 15 bzw. eine Entnahme des Koppelstifts verhindern.

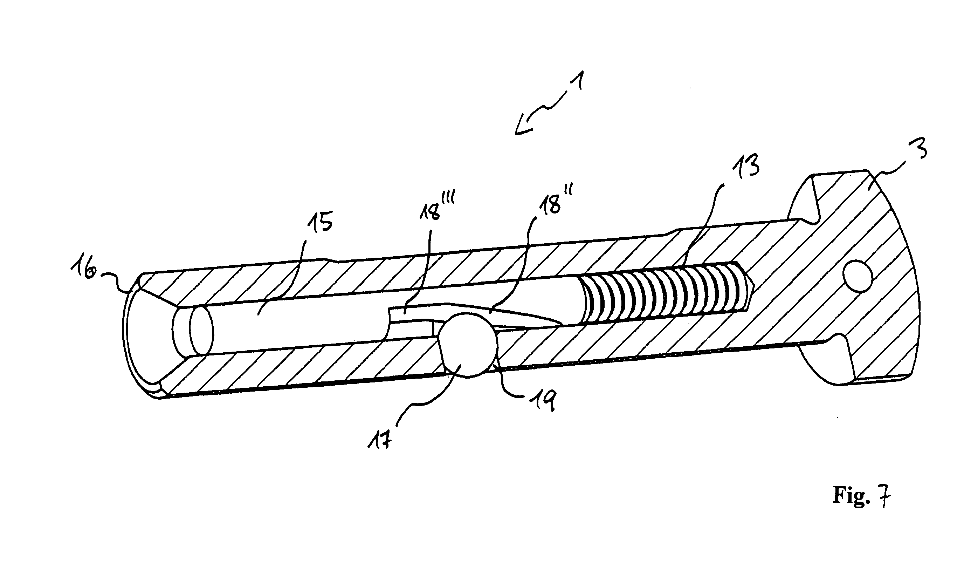

In der in Fig. 7 dargestellten Ausgestaltung des Spannstiftes 15 ist der ebene Flankenabschnitt 18 ebenfalls einseitig am Spannstift 15 ausgebildet und verläuft vom Kopf 3 des Koppelstiftes 1 zu dessen Ende 16 zunächst in einem ersten Flankenabschnitt 18" keilförmig und in einem daran anschließenden zweiten Flankenabschnitt 18"' axial, also parallel zur Längsachse des Koppelstiftes 1. In der Spannlage drängt der keilförmige Flankenabschnitt 18" das Spannelement 17 aus der Ausnehmung 19. In der Löselage befindet sich der axiale koaxiale Flankenabschnitt 18"' über dem Spannelement 17, so dass dieses innerhalb der Ausnehmung 19 beweglich ist.

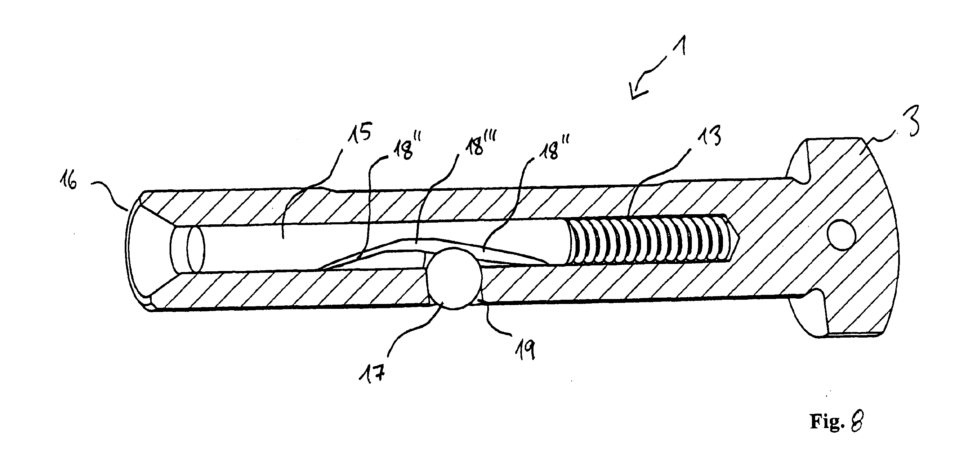

Fig. 8 zeigt eine weitere alternative Ausgestaltung des Spannstiftes 15, bei der der Flankenabschnitt 18 ebenso einseitig am Spannstift 15 ausgebildet ist. Der Flankenabschnitt 18 verläuft vom Kopf 3 des Koppelstiftes 1 zu dessen Ende 16 zunächst in einem ersten Flankenabschnitt 18" keilförmig, in einem daran anschließenden zweiten Flankenabschnitt 18"' axial und in einem daran anschließenden dritten Flankenabschnitt 18" wieder keilförmig. Der zweite Flankenabschnitt 18"' kann dabei axial also parallel zur Längsachse des Koppelstiftes 1 verlaufen. Der dem Federelement 13 zugewandte keilförmige Flankenabschnitt 18" drängt in der Spannlage das Spannelement 17 aus der Ausnehmung 19. In der Löselage ist der Flankenabschnitt 18"' über dem Spannelement 17 angeordnet, so dass dieses innerhalb der Ausnehmung 19 frei beweglich ist.

Die in den Fig. 6 bis 8 dargestellten Flankenprofile können auch umlaufend ausgebildet sein, also ähnlich der taillierten Grundausführung.

Weitere Ausgestaltungen der Erfindung ergeben sich für den Fachmann im Rahmen der nachfolgenden Patentansprüche.

## Patentansprüche

1. Koppelstift (1) zum Koppeln von Waffenbauteilen (49, 51), insbesondere von Waffengehäusebauteilen,
welcher mit wenigstens einem Stützabschnitt (6a, b) axial in einen Stützbereich (33a, b) an einem Waffenbauteil (51) und mit wenigstens einem Stellabschnitt (5) axial in einem Stellbereich (35) an einem anderen Waffenbauteil (49) entnehmbar einsetzbar ist,
wobei im Koppelstift (1) ein axial verstellbarer, federbelasteter Spannstift (15) angeordnet ist, der über eine kraftübertragende Kopplung auf ein quer zum Spannstift (15) verstellbares Spannelement (17) wirkt, welches im Stellabschnitt (5) aus dem Koppelstift (1) herausragt und eine Stellkraft auf den Stellbereich (35) ausüben kann und
den Stellbereich (35) und den Stützbereich (33a, b) quer zur Längsachse des Koppelstiftes (1) gegeneinander verstellen und verspannen kann und wobei,
wenigstens im Stellabschnitt (5) des Koppelstiftes (1) eine in Längsrichtung verlaufende Ausnehmung (9) zur Aufnahme einer Gegenfläche (45a) des Stellbereichs (35) ausgebildet ist.

2. Koppelstift (1) nach Anspruch 1, der über ein Bedienelement zwischen einer Spannlage und einer Freigabelage verstellbar ist, wobei der Koppelstift in der Freigabelage aus den Waffenbauteilen (49, 51) entnehmbar oder in diese einsetzbar ist und in der Spannlage den Stellbereich (35) und den Stützbereich (33a, b) gegeneinander verstellt und/oder verspannt.

3. Koppelstift (1) nach Anspruch 1 oder 2, der zur Kopplung eines zwischen zwei Stützbereichen (33a, b) angeordneten Stellbereichs (35) ausgelegt ist.

4. Koppelstift (1) nach Anspruch 2 oder 3, bei dem der Spannstift (15) zur kraftübertragenden Kopplung einen keilförmigen Abschnitt (18) umfasst, der in der Spannlage das Spannelement (17) radial aus dem Koppelstiftgehäuse (5) drängt.

5. Koppelstift (1) nach Anspruch 4, bei dem der keilförmige Abschnitt (18) konisch bzw. kegelstumpfförmig ausgebildet ist.

6. Koppelstift (1) nach einem der vorstehenden Ansprüche, der über ein Sicherungselement (29) gegen eine vollständige Entnahme gesichert ist.

7. Koppelstift (1) nach Anspruch 6, bei dem das Sicherungselement (29) in seinen Sicherungslagen federbelastet in eine Ausnehmung (21) des Koppelstiftes (1) eingreift.

8. Koppelstift (1) nach Anspruch 7, bei dem am Sicherungselement (29) ein federbelasteter Rastmechanismus vorgesehen ist, welcher mit wenigstens einer Rastkontur (7, 23) in der Ausnehmung (21) verrastet.

9. Koppelstift (1) nach einem der Ansprüche 7 oder 8, bei dem das Sicherungselement (29) über ein Bedienelement außer Eingriff mit der Ausnehmung (21) bringbar ist.

10. Waffengehäuse mit einem Koppelstift (1) nach einem der vorstehenden Ansprüche.

11. Waffe mit einer einem Koppelstift (1) nach einem der Ansprüche 1 bis 9.

## Claims

1. Coupling pin (1) for coupling weapon components (49, 51), in particular weapon housing components,
which coupling pin (1) can be inserted axially, in a removable manner, by at least one supporting portion (6a, b) into a supporting region (33a, b) on a weapon component (51) and can be inserted axially, in a removable manner, by at least one adjusting portion (5) in an adjusting region (35) on another weapon component (49),
wherein arranged in the coupling pin (1) is an axially adjustable, spring-loaded dowel pin (15) which acts, via a force-transmitting coupling, on a tensioning element (17) which can be adjusted transversely to the dowel pin (15) and protrudes out of the coupling pin (1) in the adjusting portion (5) and can exert an adjusting force on the adjusting region (35) and
can move and brace the adjusting region (35) and the supporting region (33a, b) against one another transversely to the longitudinal axis of the coupling pin (1) and wherein,
a longitudinally extending recess (9) for receiving an opposite surface (45a) of the adjusting region (35) is formed at least in the adjusting portion (5) of the coupling pin (1).

2. Coupling pin (1) according to claim 1, which can be adjusted between a tension position and a release position by an operating element, wherein the coupling pin can be removed from the weapon components (49, 51) or can be inserted into said weapon components (49, 51) in the release position and moves and/or braces the adjusting region (35) and the supporting region (33a, b) against one another in the tension position.

3. Coupling pin (1) according to claim 1 or claim 2, which is configured to couple an adjusting region (35) arranged between two supporting regions (33a, b).

4. Coupling pin (1) according to claim 2 or claim 3, wherein the dowel pin (15) comprises a wedge-shaped portion (18) for the force-transmitting coupling, which wedge-shaped portion (18) urges the tensioning element (17) radially out of the coupling pin housing (5) in the tension position.

5. Coupling pin (1) according to claim 4, wherein the wedge-shaped portion (18) is configured to be conical or is configured in the shape of a truncated cone.

6. Coupling pin (1) according to any one of the preceding claims, which is prevented from being completely removed by a securing element (29).

7. Coupling pin (1) according to claim 6, wherein the securing element (29) engages in a spring-loaded manner in a recess (21) in the coupling pin (1) in its securing positions.

8. Coupling pin (1) according to claim 7, wherein provided on the securing element (29) is a spring-loaded locking mechanism which locks in the recess (21) by at least one locking contour (7, 23).

9. Coupling pin (1) according to either claim 7 or claim 8, wherein the securing element (29) can be disengaged from the recess (21) by an operating element.

10. Weapon housing comprising a coupling pin (1) according to any one of the preceding claims.

11. Weapon comprising a coupling pin (1) according to any one of claims 1 to 9.

## Revendications

1. Axe d'accouplement (1) pour la connexion de pièces d'arme (49, 51), en particulier de pièces de carcasse d'arme,
lequel est insérable de manière amovible par au moins une section d'appui (6a, b) axialement dans une zone d'appui (33a, b) sur une pièce d'arme (51), et par au moins une section de réglage (5) axialement dans une zone de réglage (35) sur une autre pièce d'arme (49),
où une goupille de serrage (15) axialement réglable et contrainte par ressort est disposée dans l'axe d'accouplement (1), laquelle agit par un accouplement à transmission de force sur un élément de serrage (17) réglable transversalement à la goupille de serrage (15), lequel fait saillie de l'axe d'accouplement (1) dans la section de réglage (5) et peut exercer une force de réglage sur la zone de réglage (35), et
peut déplacer l'une vers l'autre et/ou serrer l'une contre l'autre la zone de réglage (35) et la zone d'appui (33a, b) transversalement à l'axe longitudinal de l'axe d'accouplement (1) et où,
au moins dans la section de réglage (5) de l'axe d'accouplement (1), un évidement (9) s'étendant dans la direction longitudinale est prévu pour le logement d'une surface opposée (45a) de la zone de réglage (35).

2. Axe d'accouplement (1) selon la revendication 1, lequel est déplaçable au moyen d'un élément de commande entre une position de serrage et une position de relâchement, l'axe d'accouplement pouvant en position de relâchement être retiré des pièces d'arme (49, 51) ou être mis en place dans celles-ci, et déplaçant la zone de réglage (35) et la zone d'appui (33a, b) l'une vers l'autre et/ou les serrant l'une contre l'autre en position de serrage.

3. Axe d'accouplement (1) selon la revendication 1 ou 2, prévu pour la connexion d'une zone de réglage (35) disposée entre deux zones d'appui (33a, b).

4. Axe d'accouplement (1) selon la revendication 2 ou 3, où la goupille de serrage (15) présente une section en forme de coin (18) destinée à l'accouplement à transmission de force, laquelle contraint radialement l'élément de serrage (17) hors du carter (5) de l'axe d'accouplement en position de serrage.

5. Axe d'accouplement (1) selon la revendication 4, où la section en forme de coin (18) est prévue avec une forme conique ou tronconique.

6. Axe d'accouplement (1) selon l'une des revendications précédentes, lequel est empêché d'être complètement retiré par un élément de blocage (29).

7. Axe d'accouplement (1) selon la revendication 6, où l'élément de blocage (29) s'engage dans un évidement (21) de l'axe d'accouplement (1), contraint par ressort dans ses positions de blocage.

8. Axe d'accouplement (1) selon la revendication 7, où un mécanisme d'enclenchement contraint par ressort est prévu sur l'élément de blocage (29), lequel s'enclenche dans l'évidement (21) par au moins un contour d'enclenchement (7, 23).

9. Axe d'accouplement (1) selon la revendication 7 ou 8, où l'élément de blocage (29) peut être dégagé de l'évidement (21) au moyen d'un élément de commande.

10. Carcasse d'arme avec un axe d'accouplement (1) selon l'une des revendications précédentes.

11. Arme, comportant un axe d'accouplement (1) selon l'une des revendications 1 à 9.
